# EUROPEAN PATENT APPLICATION

(11) **EP 4 109 416 A1**
(43) Date of publication of application: **28.12.2022**
(21) Application number: 22180700.1
(22) Date of filing: 23.06.2022
(51) Int. Cl.: G07B 15/06, G06F 13/42

(54) **ON-BOARD VEHICLE UNIT FOR ROAD TRAFFIC SERVICES WITH RADIO FREQUENCY COMMUNICATION TRANSPONDER**

(30) Priority: 25.06.2021 IT 202100016715
(71) Applicant: Telepass S.p.A., 00142 Roma (IT)
(72) Inventor: GRANIERI, GABRIELE, 00142 ROMA (IT); MANCINI, ANDREA, 00142 ROMA (IT); BRANCANTI, FABRIZIO, 00142 ROMA (IT); DAMIANO, MARCO, 00142 ROMA (IT)
(74) Representative: Carangelo, Pierluigi

(57) **Abstract**

An on-board vehicle unit (10) for road traffic services, comprising:
- a radiofrequency transponder module (12) adapted and configured to receive at least one query signal from at least one roadside unit (2) and to emit at least one response signal upon receiving the query signal;
- a short-range radio communication module (18) operatively connected to the radiofrequency transponder module (12) adapted and configured to communicate with a user device (8) provided with a short-range radio communication interface.

The radiofrequency transponder module (12), starting from an operating deactivation state, in which it is disabled to emit the response signal, is adapted and configured to take an operating activation state, in which it is enabled to emit the response signal, and wherein a transition from the operating deactivation state to the operating activation state is determined by an initialization request message received from the on-board vehicle unit (10) through the short-range radio communication module (18).

## Description

### FIELD OF THE INVENTION

The present invention relates to the technical field of systems allowing the supply of road traffic services using on-board vehicle units (OBU). In particular, the present invention relates to an on-board vehicle unit with radio frequency communication transponder for road traffic services.

### BACKGROUND ART

Systems allowing the supply of road traffic using on-board vehicle units are now well-known and commonly used. Such road traffic services are, for example, services for toll payments for accessing roads or highways, parking payment services or services which allow verifying whether a user of a vehicle is authorized or not to access a controlled traffic zone, services for monitoring traffic by providers of road or highway networks, etc.

The aforesaid systems comprise on-board vehicle units (or OBUs), i.e., units adapted to be removably installed or fixed on board of respective road vehicles and a plurality of roadside units (or RSUs) installed in a distributed manner, for example along toll roads, at car parking access gates or controlled traffic zones. The on-board vehicle units are provided with a radio frequency transponder, which allows a radio communication between the on-board vehicle units and the roadside units within a certain maximum operating distance, for example equal to a few meters. For example, on-board vehicle units provided with a DSRC (Dedicated Short Range Communication) radio frequency transponder are known and commonly used.

In order to ensure contingent safety needs, at present the configuration process of the on-board vehicle units is performed before delivering the on-board vehicle units to the end users. Such a configuration process is performed in the factory or at the subject in charge of distributing the on-board units to the end users. For this reason, the production, configuration and distribution activities of the on-board vehicle units are relatively costly in terms of the expenses required for the upstream configuration, and in terms of the measurements to be taken for storing and delivering them. Furthermore, for the same reasons, the production, configuration and distribution activities of the on-board vehicle units require relatively lengthy times. For example, the aforesaid configuration activities allow associating an on-board vehicle unit with at least one end user and/or at least one road vehicle and/or enabling or disabling the road traffic services.

It is a general object of the present description to provide an on-board vehicle unit, which allows overcoming, completely or at least partially, the above described problems with reference to the on-board vehicle units of the prior art.

The aforesaid object, as well as other objects which will become more apparent below, are achieved by an on-board vehicle unit for road traffic services as defined in claim 1. Preferred and advantageous embodiments of the aforesaid on-board unit are defined in the appended dependent claims.

The invention will be better understood from the following detailed description of particular embodiments thereof, given by way of non-limiting example, with reference to the accompanying drawings briefly described in the following paragraphs.

### BRIEF DESCRIPTION OF THE DRAWINGS

Figure 1 shows a block diagram of a non-limiting exemplary embodiment of a system for supplying road traffic services.
Figure 2 shows a functional block diagram of a non-limiting embodiment of an on-board vehicle unit being usable in the system in figure 1.

### DETAILED DESCRIPTION

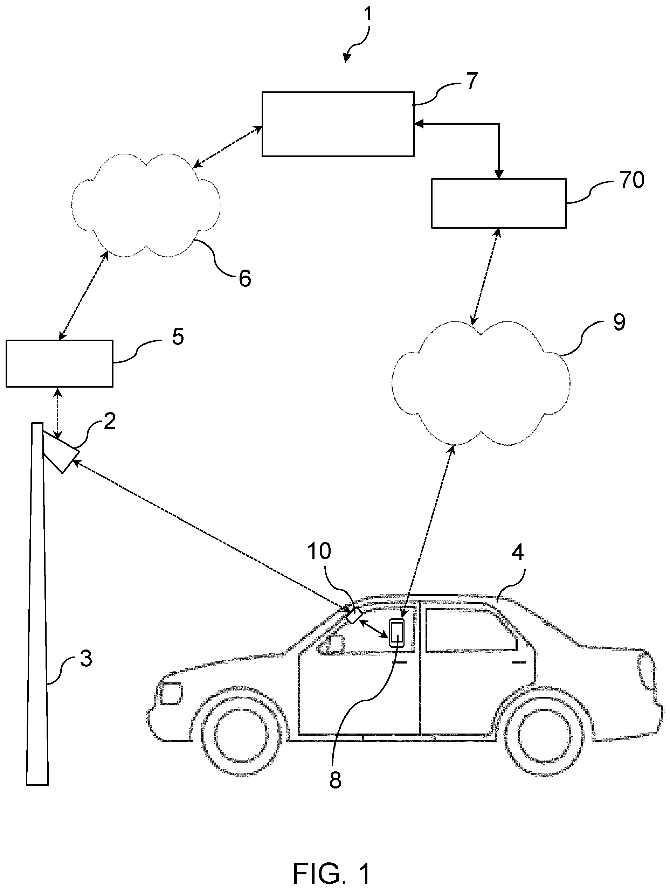

Figure 1 shows a non-limiting exemplary embodiment of a system 1 for supplying road traffic services, also referred to as a supply system 1. The supply system 1 comprises at least one on-board vehicle unit 10, or OBU 10, adapted and configured to be installed on board a transport vehicle 4, such as for example a car. In alternative embodiments, the transport vehicle 4 could be a van, a motorbike, a truck, etc. The installation of the OBU 10 on board the transport vehicle 4 can be of the fixed type, or conveniently it can be a removable installation, e.g., on the dashboard or windscreen of the transport vehicle 4.

For example, the supply system 1 is a system allowing the supply of one or more of the road traffic services from the following list: road toll, payment and/or control of car parking, access to controlled traffic zones, monitoring of road traffic, automated refueling payment, similar or equivalent services as those described above. Therefore, it is apparent that the system 1 can be a single-service or a multi-service system.

The supply system 1 comprises at least one roadside unit 2, or RSU 2, adapted and configured to communicate by radio with the at least one on-board vehicle unit 10, e.g., by sending radio frequency query signals and receiving radio frequency response signals from the OBU 10. The RSU 2 is installed, for example, on a support element 3, which can be a pole, a pylon, a connecting gate, for example. As known, in these road applications, the operating range of the radio frequency communication is, for example, in the order of meters, generally less than 10 meters, and for example equal to about 5 meters. For example, the RSU 2 can send a query signal to the OBU 10 for requesting at least one unique identification datum, such as for example a serial number of the OBU 10 and/or a number plate code of the transport vehicle 4 and/or an identification datum of the end user or of his/her bank account for debiting the traffic service. The OBU 10 is adapted and configured to respond to the query signal in order to provide the RSU 2 with the requested identification datum.

It must be clear that the supply system 1 in figure 1 has been depicted in a highly simplified manner and that in a real implementation the supply system 1 can manage to comprise a very high number of spatially distributed roadside units 2 and an even higher number of on-board vehicle units 10 installed on board respective transport vehicles 4. For example, the number of roadside units 2 can be in the order of hundreds or thousands and the number of on-board vehicle units 10 can be in the order of hundreds of thousands or a million.

The RSU 2 is connected, for example, to a local control unit 5, adapted and configured to acquire data from the RSU 2 and to control the operation thereof. The local control unit 5 is preferably connected to a remote control center 7 of the road traffic service provider by means of a wireless and/or wired data communication network 6. It is apparent that the remote control center 7 can be a single hardware and software unit or a plurality of spatially distributed hardware and software entities.

Furthermore, the supply system 1 comprises at least one user device 8, such as for example a personal communication wireless device and/or a wearable device, and an application program, or APP, installed on board the user device 8. The application program is a program to be downloaded, for example, from an online store for application programs. The user device 8 is, for example, a smartphone, a tablet-pc, a smartwatch, etc.

The user device 8 and the OBU 10 are adapted and configured to communicate with each other by virtue of a short-range radio communication, e.g., a proximity radio communication. According to a particularly advantageous embodiment, the aforesaid proximity radio communication is an NFC (Near Field Communication) communication.

By virtue of such a short-range radio communication, an end user can initialize the OBU 10 by means of the application program installed on board the user device 8, so as to bring it from an initial operating deactivation state to an operating activation state. In the initial operating deactivation state the OBU 10 is not linked to, i.e., associated with, any end user, while in the operating activation state the OBU 10 is linked to, i.e., associated with, an end user. Thus, subjects, such as the supplier, the manufacturer, the seller of the OBU 10 can safely deliver the OBU 10 to an end user who can initialize it in order to use it, when necessary, after bringing it into the operating activation state. Furthermore, after the aforesaid initialization, advantageously, an end user can manage the functionalities of the OBU 10 and/or configure the OBU 10 to enable and/or disable services and/or acquire status information of the OBU 10 and/or consult data acquired from the OBU 10 and/or stored in the same.

The user device 8 is such as to transmit and/or receive data on a wireless data network 9, e.g., a radio mobile data network, e.g., a 3G or 4G or 5G or GPRS network, to interface with a back end server 70. It is thus possible to establish an operating data connection between the OBU 10, the user device 8 and the related APP and the back end server 70. For example, the back end server 70 is also controlled by the provider of the road traffic services and for this reason it can be operatively connected to or integrated in the remote control center 7.

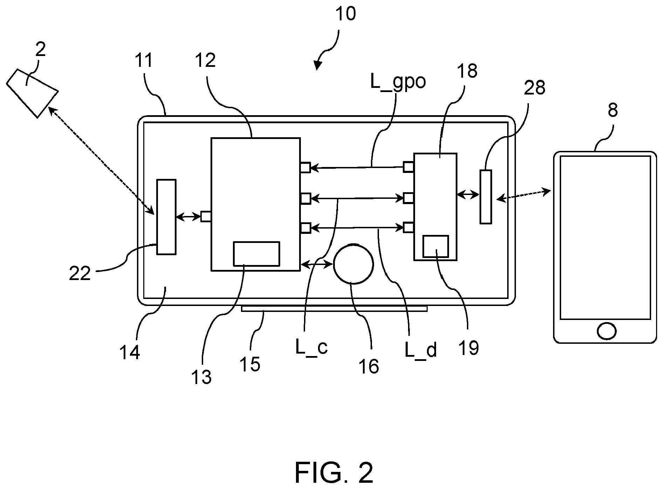

A non-limiting embodiment of the on-board vehicle unit 10 for road traffic services will now be described with reference to figure 2.

The on-board vehicle unit 10 preferably comprises a container body 11, e.g., made of a plastic material, such as ABS. The container body 11 comprises an inner housing compartment, which houses electronic components of the on-board vehicle unit 10.

The on-board vehicle unit 10 conveniently comprises fixing means 15 mounted to the container body 11 and adapted and configured to allow fixing, preferably removably fixing, the on-board vehicle unit 10 inside the cabin of the transport vehicle 4, e.g., on a dashboard or on a windscreen. Such fixing means 15 comprise, for example, a first tear-off half-label adapted to be removably coupled to a second complementary tear-off half-label fixable inside the cabin of the transport vehicle 4.

The on-board vehicle unit 10 for road traffic services comprises a radiofrequency transponder module 12 adapted and configured to receive at least a signal, or message, from at least one roadside unit 2 and to emit at least one response signal or message message upon receiving the query signal. From this point on, the radio frequency transponder module 12 will also be referred to as RF transponder module.

According to an advantageous and non-limiting embodiment, the RF transponder module 12 is a DSRC (Dedicated Short Range Communication) transponder module. Therefore, the signals or messages exchanged between the RF transponder module 12 and the roadside unit 2 travel on one or more DSRC channels according to a DSRC communication protocol.

The RF transponder module 12 comprises or is connected to a first antenna 22. Advantageously, the RF transponder module 12 can be made with a microcontroller with related firmware on board or a system-on-chip (SOC). The RF transponder module 12 comprises a memory unit 13, e.g., an EEPROM.

The on-board vehicle unit 10 for road traffic services further comprises a short-range radio communication module 18 operatively connected to the radiofrequency transponder module 12 adapted and configured to communicate with a user device 8 provided with a short-range radio communication interface. By virtue of the short-range radio communication module 18, the radio frequency transponder module 12 and the user device 8 can be operatively connected to each other to allow an exchange of data. Furthermore, it is thus possible to establish a data connection between the radio frequency transponder module 12, or generally between the OBU 10, and the back end server 70.

According to an advantageous embodiment, the short-range radio communication module 18 comprises a memory unit 19, e.g., an EEPROM.

The memory unit 19 preferably has a first memory area, which is accessible to be read and written by both the short-range radio communication module 18 and the RF transponder module 12, in order to allow an exchange of messages between these two modules 12, 18. In other words, this first memory area serves as a mailbox for the exchange of data or messages between the two modules 12, 18. This first memory area preferably allows a direct exchange of messages and/or data between the radio frequency transponder module 12 and the short-range radio communication module 18 in rapid transfer mode. In this respect, the first memory area is conveniently a volatile memory buffer managed dynamically, e.g., with a capacity equal to 256 byte. Rapid transfer mode is understood to mean, for example, a data exchange mode at a speed in the order of Mb/s, e.g., equal to 1 Mb/s.

According to a particularly advantageous embodiment, the memory unit 19 has, as an alternative, or in addition to the first dedicated memory area, a second dedicated memory area adapted and configured to store data provided from the RF transponder module 12 to the short-range radio communication module 18. The short-range radio communication module 18 is adapted and configured to provide the user device 8 with data stored in the second dedicated memory area upon receiving data reading request messages sent from the user device 8.

For example, the data stored in the second memory area carries one or more pieces of information from the following list:
- transit information at one or more roadside units 2;
- information on traffic services enabled for the on-board vehicle unit 10;
- status information of the RF transponder module 12.

The transit information contains, for example, transit time data (such as the time and day of transit); identification data of the RSU 2 at which a transit of the OBU 10 occurred, data indicating the type of transit (input or output). According to a particularly advantageous embodiment, the transit data stored in the second memory area of the memory unit 19 concern a determined number N of more recent transits. N is preferably an integer greater than 1 and for example in the order of tens or hundreds. The transit data are preferably stored on a portion of the second memory area, which is managed as a circular buffer, in which the most recent transit data overwrite the oldest transit data.

The information relating to the enabled traffic services comprises, for example, indicative data in the territories where the toll payment is enabled (e.g., tolling Italy, tolling France, tolling Spain, etc.).

The status information of the RF transponder module 12 comprises, for example, the firmware version, the OBU 10 serial number, the number plate, the weight and the number of axes of the transport vehicle 4 with which the OBU 10 is associated.

According to a particularly advantageous embodiment, the short-range radio communication module 18 comprises an NFC (Near Field Communication) communication interface. For example, the short-range radio communication module 18 is an NFC/RFID (Near Field Communication/Radio Frequency Identification) tag, preferably a tag provided with the aforesaid memory unit 19.

According to a particularly advantageous embodiment, the short-range radio communication module 18 is operatively connected to the radio frequency transponder module 12 by means of an I²C (Inter-Integrated Circuit) serial communication bus. Said bus comprises a clock line L_c and a data line L_d. In this case, the short-range radio communication module 18 is thus a dynamic NFC tag, because it is provided with a double communication interface, one of which is the short-range radio interface and the other is the I²C wired interface.

According to an advantageous embodiment, the short-range radio communication module 18 is operatively connected to the RF transponder module 12 by means of a control line L_gpo. This control line L_gpo, which is for example, a GPO (General Purpose Output) line, can be used for sending an interrupt or awakening signal to the short-range radio communication module 18 to the RF transponder module 12. For example, the interrupt or awakening signal is sent, when a determined short-range communication activity is initiated, for example, an NFC activity, between the user device 8 and the short-range radio communication module 18, also according to the type of signal or short-range communication message sent from the user device 8 to the short-range radio communication module 18, to avoid any short-range communication activity automatically determining an awakening of the radio frequency transponder module 12 starting from a sleeping state.

Advantageously, the short-range radio communication module 18 comprises, or is connected to a second antenna 28. The short-range radio communication module 18 can be made as an integrated circuit with related firmware on board, or as a system-on-chip (SOC).

Although, in the diagram in figure 2, the RF transponder module 12 and the short-range radio communication module 18 have logically been depicted as two different circuit entities operatively connected to each other according to an embodiment, it is possible to integrate said circuit entities in the same circuit entity, e.g., in the same integrated circuit or SOC.

The OBU 10 preferably comprises a printed circuit board 14 to which the RF transponder module 12 and the short-range radio communication module 18 are mounted. The connection between these two modules 12, 18 is preferably made by means of electrically conductive tracks. The first antenna 22 and the second antenna 28 are preferably also mounted to the printed circuit board 14.

According to an advantageous embodiment, the OBU 10 further comprises at least one supply battery 16, e.g., a lithium ion battery, which is preferably supported by the printed circuit board 14. Such a supply battery 16 preferably only supplies the RF transponder module 12 or at least it does not supply the short-range radio communication module 18.

When an OBU 10 is supplied to an end user, e.g., subject to the signing of a contract with the traffic service provider, the radio frequency transponder module 12 is in an initial operating deactivation state. The radio frequency transponder module 12, starting from the initial operating deactivation state, in which it is disabled to emit the response signal to the query signal emitted by an RSU 2, is adapted and configured to take an operating activation state, in which it is enabled to emit the response signal each time it is queried by an RSU 2. In other words, in the initial operating deactivation state, the RF module 12 is inert, i.e., it does not respond to query signals sent from the RSU 2. The operating activation state is instead a state of normal use of the RF transponder module 12.

The transition from the initial operating deactivation state to the operating activation state is determined by an initialization request message sent from the user device 8 and received by the on-board vehicle unit 10 by means of the short-range radio communication module 18. Thus, the initialization request message is a message transmitted from the user device 8 to the short-range radio communication module 18. For example, it can be hypothesized that, in the initial operating deactivation state, the radio frequency transponder module 12 is in a sleeping state. Upon receiving the initialization request signal, the short-range radio communication module 18 is such as to send a first interrupt signal or awakening signal to the transponder module 12, e.g., on the control line L_gpo, so as to bring the radio frequency transponder module 12 into the awakening state. In this awakening state, the RF transponder module 12 can read or receive the initialization request message. For example, the RF transponder module 12 is programed so that after taking the awakening state it accesses, to be read, the first area of the memory unit 19 of the short-range radio communication module 18, which is dedicated to the exchange of messages between the RF transponder module 12 and the short-range radio communication module 18. Such an access preferably takes place by means of the I²C interface.

Once the transition to the operating activation state has taken place, the radio frequency transponder module 12 remains constantly in the activation state. This does not exclude, for example, that once the end user has delivered the OBU 10 back to the manufacturer or to the supplier, they can perform a procedure in the factory to bring the RF transponder module 12 back into the initial deactivation state, e.g., before reassigning it to a new end user.

According to an advantageous embodiment, at least a first part of the data stored in the memory unit 19 of the short-range radio communication module 18 is encrypted by the radio frequency transponder module 12 and at least a second part of the data stored in the memory unit 19 is not encrypted, i.e., it is readable in plain text. For example, it is possible to provide that the transit information is stored as encrypted data and the information relating to the enabled traffic services is stored as non-encrypted data.

According to a particularly advantageous embodiment, upon receiving the initialization request message, the radiofrequency transponder module 12 is adapted and configured to perform a generation routine for generating and storing an operating encryption key, preferably a symmetrical encryption key, for encrypting data to be sent to the short-range radio communication module 18 and for decrypting data received from the short-range radio communication module 18. Preferably, during the execution of such a generation routine, the radio frequency transponder module 12 is such as to communicate with the back end server 70 by means of the user device 8. An operating encryption key can thus be generated in a particularly safe manner through a handshaking algorithm, which involves the RF transponder module 70 and the back end server 70, where the short-range communication interface 12 and the user device 10, and in particular the application program, are not aware of the operating encryption key and therefore cannot decrypt the data exchanged between the RF transponder module 12 and the back end server 70.

A possible non-limiting embodiment of a generation routine of the operating encryption key will be described below. It is hypothesized, for example, that an end user has acquired an OBU 10 from a physical or online sales point and that the RF transponder module 12 of the OBU 10 is in the deactivation state and preferably also in the sleeping state.

Preferably, by scanning a QR code printed on the OBU 10 or on the packaging thereof, the end user downloads the dedicated application program (or APP) on the user device 8 and enters one or more data from the following list:
- personal details;
- cell number;
- email;
- number plate of the transport vehicle 4;
- data of a credit card and/or of a current bank account.

By means of scanning the QR code or manual insertion by the end user, the APP acquires a unique public identifier of the OBU 10, such as for example the serial number printed on the OBU 10 or on the related packaging, in plain text or encoded in the QR code. A unique private identifier has previously been associated with such a unique public identifier in the step of manufacturing the OBU 10 at the back end server 70, as well as a factory encryption key.

The aforesaid data are sent from the user device 8 to the back end server 70. Preferably, the APP allows the user to sign a contract with the service provider.

During the execution of the APP on the user device 8, the end user initiates a section of the same by means of the APP, which allows initializing the RF transponder module 12. Thus, the end user brings the user device 8 close to the OBU 10 and the short-range radio communication module 18 receives, from the user device 8, an initialization request message, by means of which the private identification datum of the OBU 10 encrypted with the factory key is transmitted to the transponder module 12. The private identification datum of the OBU 10 is, for example, the unique identification number of the microcontroller of the RF transponder module 12.

To send the initialization request message to the radio frequency transponder module 12, for example, the short-range radio communication module 18 brings the RF transponder module 12 into the awakening state by means of sending an interrupt or awakening signal on the control line L_gpo. After taking the awakening state, the RF transponder module 12 periodically checks the memory unit 19 and, in particular, the first memory area, to check whether a message is present. The short-range radio communication module 18 writes, in such a memory unit 19, the initialization request message, which has as the parameter, the private identification datum of the OBU 10 encrypted with the factory key.

At a certain point, the radio frequency transponder module 12 detects the presence of an initialization message in the memory unit 19 and reads such a message. The radio frequency transponder module 12 has already previously stored the unique private identifier and the factory encryption key in the memory unit 13 thereof, these data being stored in the manufacturing step. Therefore, the RF transponder module 12 can decrypt, with the stored factory encryption key, the private identification datum received by means of the aforesaid message and check whether such a private identification datum coincides with the one stored in the memory unit 13 thereof. If it coincides, the RF transponder module 12 generates a random number for generating a session encryption key and writes it in the memory unit 13 and sends a response message with such a random number to the short-range radio communication module 18, for example, by writing such a message in the first memory area of the memory unit 19. The short-range radio communication module 18 reads such a number and sends it to the back end server 70 by means of the APP. After the reception, the back end server 70 generates the session encryption key and an operating encryption key from the random number and sends the operating encryption key encrypted with the session encryption key to the user device 8 by means of the APP.

The user device 8 sends a setting request message to the short-range communication module 18 for setting the operating encryption key, which has, as the parameter, the operating encryption key encrypted with the session encryption key. This message is written in the memory unit 19 and read by the RF transponder module 12. The RF transponder module 12 decrypts the operating encryption key by means of the session encryption key and stores it in the memory unit 13. At this point, both the back end server 70 and the RF transponder module 12 know the operating encryption key and can use such a key to exchange messages. Furthermore, after storing the operating encryption key, the RF transponder module 12 takes the activation state and is therefore enabled to respond to query requests sent from the RSU 2. After taking the operating activation state, the radiofrequency transponder module 18 is conveniently adapted and configured to selectively take a sleeping state or an awakening state, and where the radiofrequency transponder module 18, starting from the sleeping state, is such as to take the awakening state both upon receiving a first awakening signal supplied by the short-range radio communication module 18 and upon receiving a second awakening signal supplied by the roadside unit 2. Advantageously, the first and the second awakening signal are received on separate input ports of the radio frequency transponder module 12. For example, as explained previously, the first awakening signal is received on an input port connected to the control line L_gpo. The second awakening signal is received through an input port (in this case an input-output port) connected to the antenna 22.

Although the provision of the short-range communication interface module 18 is particularly useful for brining the RF transponder module into the activation state, the provision of such a module also allows performing additional functionalities.

In a first example, the end user can consult the transits stored in the second area of the memory unit 19 by means of the APP. In this case, the APP sends a transit data read signal to the short-range radio communication module 18 by means of the user device 8. Upon receiving such a message, the short-range radio communication module 18 accesses the memory unit 19 and sends a response message to the user device 8 carrying the requested data. In this case, it is not necessary to awaken the radio frequency transponder module 12. In this case, the data sent to the user device 8 are preferably encrypted with the operating encryption key, which is preferably known to the backend server 70 and not to the APP or to the user device 8. For this reason, it is possible to provide that the APP forwards a request to the back end server 70 to decrypt the encrypted data and that the back end server 70 sends a response with the decrypted data to the user device 8.

In a further example, the end user can consult the state of charge of the supply battery 16 by means of the APP. In this case, the APP sends the short-range radio communication module 18 a read signal of the state of charge of the battery by means of the user device 8. Upon receiving such a read message, the short-range radio communication module 18 awakens the RF transponder module 12 and writes the aforesaid message in the memory unit 19. After the awakening, the RF transponder module 12 accesses the memory unit 19 to read the aforesaid message and sends a response message, by means of the short-range communication module 18, to the user device 8 carrying data correlated to the state of charge of the battery 16. For example, these data are not encrypted and can be consulted directly via the APP and the user device 8.

From the above, it is apparent that an on-board vehicle unit 10 for road traffic services of the type described above allows achieving completely the preset objects in terms of overcoming the drawbacks of the prior art. In fact, the provision of a short-range communication interface module 18 in combination with the radio frequency transponder 12 allows delivering the on-board vehicle units 10 to the end users in a state of deactivation and it allows the end users to bring them safely into the activation state. Furthermore, the provision of the combination of the aforesaid modules 12, 18 allows obtaining additional advantages, such as for example the possibility for the end user to access the operating information with particular efficiency, such as for example data relating to the last transits, and/or status information of the on-board vehicle unit 10, such as for example the state of charge of the supply battery.

Without prejudice to the principle of the invention, the embodiments and the manufacturing details can be broadly varied with respect to the above description merely given by way of a non-limiting example, without departing from the scope of the invention as defined in the appended claims.

## Claims

1. An on-board vehicle unit (10) for road traffic services, comprising:
- a radiofrequency transponder module (12) adapted and configured to receive at least one query signal from at least one roadside unit (2) and to emit at least one response signal upon receiving the query signal;
- a short-range radio communication module (18) operatively connected to the radiofrequency transponder module (12) adapted and configured to communicate with a user device (8) provided with a short-range radio communication interface;
wherein:
- the radiofrequency transponder module (12), starting from an operating deactivation state, in which it is disabled to emit the response signal, is adapted and configured to take an operating activation state, in which it is enabled to emit the response signal, and wherein a transition from the operating deactivation state to the operating activation state is determined by an initialization request message received from the on-board vehicle unit (10) through the short-range radio communication module (18).

2. An on-board vehicle unit (10) for road traffic services according to claim 1, wherein the short-range radio communication module (18) comprises an NFC (Near Field Communication) interface.

3. An on-board vehicle unit (10) for road traffic services according to claims 1 or 2, wherein the short-range radio communication module (18) is operatively connected to the radiofrequency transponder module (12) through an I²C serial communication bus.

4. An on-board vehicle unit (10) for road traffic services according to claim 3, wherein said I²C serial communication bus comprises a clock line (L_c) and a data line (L_d) and wherein the short-range radio communication module (18) is a dynamic NFC tag.

5. An on-board vehicle unit (10) for road traffic services according to any one of the preceding claims, wherein the short-range radio communication module (18) comprises a memory unit (19) and wherein said memory unit (19) has a first memory area, which is accessible to be read and written by both the short-range radio communication module (18) and the radio frequency transponder module (12), in order to allow an exchange of messages between said modules (12, 18).

6. An on-board vehicle unit (10) for road traffic services according to claim 5, wherein the memory unit (19) has a second memory area adapted and configured to store data supplied from the radio frequency transponder module (12) to the short-range radio communication module (18), and wherein the short-range radio communication module (18) is adapted and configured to supply the user device (8) with data stored in the second memory area upon receiving data read request messages sent from the user device (8).

7. An on-board vehicle unit for road traffic services according to claim 6, wherein said stored data carry one or more pieces of information from the following list:
- transit information at said at least one roadside unit (2) ;
- information relating to traffic services enabled for the on-board vehicle unit (10);
- status information of the radiofrequency transponder module (11).

8. An on-board vehicle unit (10) for road traffic services according to any one of claims 5 to 7, wherein at least a first part of data stored in said memory unit (19) is encrypted by the radiofrequency transponder module (12) and at least a second part of data stored in said memory unit (19) is not encrypted.

9. An on-board vehicle unit (10) for road traffic services according to any one of claims 5 to 8, wherein said first memory area allows a direct exchange of messages and/or data between the radio frequency transponder module (12) and the short-range radio communication module (18) in rapid transfer mode.

10. An on-board vehicle unit (10) according to any one of the preceding claims, wherein the radiofrequency transponder module (12), upon receiving the initialization request message, is adapted and configured to perform a generation routine for generating and storing an operating encryption key for encrypting data to be sent to the short-range radio communication module (18) and for decrypting data received from the short-range radio communication module (18).

11. An on-board vehicle unit (10) according to claim 10, wherein, when performing said generation routine, the radiofrequency transponder module (12) is such as to communicate through the user device (8) with a back end server (70), and wherein, during said generation routine, a handshaking algorithm is performed between the radiofrequency transponder module (18) and the back end server (70).

12. An on-board vehicle unit (10) according to any one of the preceding claims, wherein, after taking the operating activation state, the radiofrequency transponder module (18) is adapted and configured to selectively take a sleeping state or an awakening state, and wherein the radiofrequency transponder module (18), starting from the sleeping state, is such as to take the awakening state both upon receiving a first awakening signal supplied by the short-range radio communication module (18) and upon receiving a second awakening signal supplied by the roadside unit (2) .

13. An on-board vehicle unit (10) according to claim 12, wherein the first and the second awakening signal are received on separate input ports of the radiofrequency transponder module (12).

14. A group of parts comprising an on-board vehicle unit (10) according to any one of the preceding claims and an application program installed or installable on board said user device (8) to allow an exchange of data between said radiofrequency transponder (12) and said user device (8) by means of said short-range radio communication module (18).

15. A group of parts according to claim 14, wherein when said application program is installed on board the user device (8), it allows an end user to initialize the on-board vehicle unit (10), so as to bring it from the initial operating deactivation state to the operating activation state, and wherein, in the operating deactivation state, the on-board vehicle unit (10) is not associated with any end user, while in the operating activation state, the on-board vehicle unit (10) is associated with said end user.
